# EUROPEAN PATENT APPLICATION

(11) **EP 3 184 578 A1**
(43) Date of publication of application: **28.06.2017**
(21) Application number: 15307129.5
(22) Date of filing: 23.12.2015
(51) Int. Cl.: C08G 83/00

(54) **SINGLE WALLED COORDINATION POLYMER**

(71) Applicant: Université d'Aix Marseille, 13284 Marseille Cedex 07 (FR); CENTRE NATIONAL DE LA RECHERCHE SCIENTIFIQUE -CNRS-, 75794 Paris Cedex 16 (FR)
(72) Inventor: ABEL, Mathieu, 13013 Marseille (FR); KOUDIA, Mathieu, 13013 Marseille (FR); SIRI, Olivier, 13720 Belcodene (FR); NARDI, Elena, 13005 Marseille (FR)
(74) Representative: Osha Liang

(57) **Abstract**

The present disclosure relates to a one dimensional or two dimensional coordination polymer comprising a plurality of repeating coordination units, wherein the repeating coordination unit comprises a metal coordinated with a π-conjugated organic compound, and wherein the repeating coordination units are conjugated to one another. The disclosure also relates to a two dimensional structure comprising the self-assembled one dimensional coordination polymers. The disclosure also relates an assembly comprising a substrate and one or more one dimensional or two dimensional coordination polymers deposited thereon. The disclosure also relates to a process for producing the one dimensional or two dimensional coordination polymer, the process comprising: co-depositing the metal and the π-conjugated organic compound on a substrate. The disclosure also relates to: a use of the one dimensional or two dimensional coordination polymer for spintronic, molecular electronic, and/or catalysis applications; a fuel cell comprising the one dimensional or two dimensional coordination polymer; and a molecular magnet comprising the one dimensional or two dimensional coordination polymer.

## Description

### TECHNICAL FIELD

The present disclosure relates to coordination polymers, an assembly comprising coordination polymers, a process for producing coordination polymers, the use of coordination polymers for spintronic and catalysis applications, and a fuel cell as well as a molecular magnet comprising coordination polymers.

### BACKGROUND

Two-dimensional (2D) materials such as graphene have attracted great attention in recent years in many fields such as spintronic and catalysis. While pristine graphene is available in defect-free long-range order sizes, graphene does not behave like a semi-conductor. Therefore, a key challenge in the field of nanotechnology is to open a band-gap by covalent functionalization. Many routes reported to date use chemical oxidation or plasma etching to functionalize graphene, unfortunately providing random active sites.

In this context, metal oxides, hydroxides, chalcogenides and metalorganic frameworks are emerging alternatives beyond graphene to produce functional networks in the single layer regime. Among them, covalent organic frameworks have demonstrated to be a powerful tool to realize conductive single layers.

A first method for providing 2D covalent organic frameworks consists of incorporating metal atoms directly during the synthesis of 2D polymerizable organic materials by polymerizing precursors in solution and under mild polymerization temperature (see Abel, M., et al., "Single Layer of Polymeric Fe-Phthalocyanine: An Organometallic Sheet on Metal and Thin Insulating Film," Journal of the American Chemical Society, 2011, 133(5), p. 1203-1205). However, the 2D polymerizable materials suffer from limited extension of the polymer due to difficulties to control the non-reversible character of the covalent bond formation.

A second method for providing 2D covalent organic frameworks consists of depositing a precursor on a single crystal surface under ultra-high vacuum (UHV) to confine the reaction to two dimensions and to impose a monolayer growth regime (see Grill, L., et al., "Nano-architectures by covalent assembly of molecular building blocks," Nature Nanotechnology, 2007, 2(11), p. 687-691). However, growth kinetics of the 2D covalent organic frameworks cannot be controlled. In addition, the absence of solvent generates a large number of defects and limits the size of the 2D crystalline domain of the 2D covalent organic framework. Various other 2D covalent organic networks have also been obtained using UHV deposition of single molecules, which are either annealed to activate the polymerization reactions, or directly obtained by depositing single molecules on surfaces maintained at a temperature above the polymerization reaction temperature. However, the resulting crystalline domains are limited in size and comprise defects.

Accordingly, there exists a continuing need to provide 1 D materials and well-defined 2D materials over large scales with low defects.

### SUMMARY

An object of the present disclosure is to provide one dimensional and two dimensional coordination polymers having regularly spaced metallic atoms and low amount of defects. Another object of the present disclosure is to provide one dimensional and two dimensional coordination polymers exhibiting unprecedented features, such as sufficient size, conductivity characteristics and high metal atom density, for applications in many fields such as spintronic, molecular electronic, molecular magnet, fuel cell and catalysis.

According to a first aspect, one or more of the above-mentioned objects, as well as further advantages, are achieved by a one dimensional or two dimensional coordination polymer comprising a plurality of repeating coordination units, wherein the repeating coordination unit comprises a metal coordinated with a π-conjugated organic compound, and wherein the repeating coordination units are conjugated to one another.

According to a second aspect, one or more of the above-mentioned objects, as well as further advantages, are achieved by a two dimensional structure comprising self-assembled one dimensional coordination polymers according to any of the embodiments of the first aspect.

According to a third aspect, one or more of the above-mentioned objects, as well as further advantages, are achieved by an assembly comprising a substrate and one or more one dimensional or two dimensional coordination polymers according to any of the embodiments of the first aspect and/or one or more two dimensional structures according to any of the embodiments of the second aspect deposited thereon.

According to a fourth aspect, one or more of the above-mentioned objects, as well as further advantages, are achieved by a process for producing a one dimensional or two dimensional coordination polymer according to any of the embodiments of the first aspect, and/or a two dimensional structure according to the second aspect, process comprising: co-depositing the metal and the π-conjugated organic compound on a substrate.

According to a fifth aspect, one or more of the above-mentioned objects, as well as further advantages, are achieved by a use of a one dimensional or two dimensional coordination polymer according to any of the embodiments of the first aspect, and/or a two dimensional structure according to any of the embodiments of the second aspect, and/or an assembly according to any of the embodiments of the third aspect, and/or a one dimensional or two dimensional coordination polymer produced by the process according to any of the embodiments of the fourth aspect, for spintronic and/or catalysis applications.

According to a sixth aspect, one or more of the above-mentioned objects, as well as further advantages, are achieved by a fuel cell comprising a one dimensional or two dimensional coordination polymer according to any of the embodiments of the first aspect, and/or a two dimensional structure according to any of the embodiments of the second aspect, and/or an assembly according to any of the embodiments of the third aspect, and/or a one dimensional or two dimensional coordination polymer produced by the process according to any of the embodiments of the fourth aspect.

According to a seventh aspect, one or more of the above-mentioned objects, as well as further advantages, are achieved by a molecular magnet comprising a one dimensional or two dimensional coordination polymer according to any of the embodiments of the first aspect, and/or a two dimensional structure according to any of the embodiments of the second aspect, and/or an assembly according to any of the embodiments of the third aspect, and/or a one dimensional or two dimensional coordination polymer produced by the process according to any of the embodiments of the fourth aspect.

Embodiments of the present disclosure according to the above aspects are defined in the following description and appended claims.

Other aspects and advantages of the present disclosure will be apparent from the following figures, description and appended claims.

### BRIEF DESCRIPTION OF DRAWINGS

The present disclosure will be better understood and other advantages and embodiments will become clear on reading the description that follows, given purely by way of indication and in no way limiting, and by referring to the appended figures in which:
Figures 1A and 1B show STM images of coordination polymers according to embodiments of the present disclosure;
Figures 2A and 2B show STM images of two dimensional structures according to embodiments of the present disclosure;
Figure 3A shows a high resolution STM image of a two dimensional structure according to embodiments of the present disclosure;
Figure 3B shows a DFT model of a two dimensional structure according to embodiments of the present disclosure;
Figures 4A and 4B show STM images of coordination polymers according to embodiments of the present disclosure;
Figures 5A, 5B and 5C show STM images showing the effect of metal deposition rate on the formation of two dimensional structures according to embodiments of the present disclosure;
Figures 6A and 6B show scanning tunneling microscopy (STM) images of comparative coordination polymers;
Figure 7A shows a high resolution STM image of a comparative coordination polymer;
Figure 7B shows a density functional theory (DFT) model of a comparative coordination polymer;
Figure 8A shows a STM image of comparative coordination polymers;
Figure 8B shows a STM image of coordination polymers according to embodiments of the present disclosure obtained after a first annealing of the polymers of Figure 8A; and
Figure 8C shows a STM image of coordination polymers according to embodiments of the present disclosure after a second annealing of the polymers of Figure 8B.

### DETAILED DESCRIPTION OF EMBODIMENTS

Embodiments of the present disclosure will now be described in detail with reference to the accompanying figures. In the following detailed description of embodiments of the present disclosure, numerous specific details are set forth in order to provide a more thorough understanding of the present disclosure. However, it will be apparent to one of ordinary skill in the art that the present disclosure may be practiced without these specific details. In other instances, well-known features have not been described in detail to avoid unnecessarily complicating the description.

Herein, the terms *"comprise*/*comprising"* are synonymous with (means the same thing as) *"includelincluding,"* "*contain*/*containing*", are inclusive or open-ended and do not exclude additional, non-recited elements. Further, herein the term *"about"* is synonymous with (means the same thing as) within a 20 percent lower and/or higher margin of the respective value.

Herein, the term *"coordination polymer"* is synonymous with (means the same thing as) an inorganic or organometallic polymer structure containing metal cation centers linked by organic compounds, i.e., ligands. Specifically, a *"coordination polymer"* is a polymer having repeating coordination units extending in one, two or three dimensions.

Herein, the term *"one dimensional coordination polymer"* is synonymous with (means the same thing as) a coordination polymer having repeating coordination units extending only in one dimension, *i.e.,* a coordination polymer forming only a 1 D covalent chain. Thus, 1 D self assembled structures formed through (weak) intermolecular bonding, i.e., hydrogen bonds and van der Waals forces are not included in the definition of a *"one dimensional coordination polymer."* A *"one dimensional coordination polymer"* is distinct from 2D and 3D coordination polymers, which rather have repeating coordination units extending in two and three dimensions, respectively, *i.e.,* forming 2D and 3D covalent networks.

Herein, the term *"two dimensional coordination polymer"* is synonymous with (means the same thing as) a coordination polymer having repeating coordination units extending only in two dimensions, *i.e.,* a coordination polymer forming only a 2D covalent network. Thus, 2D self assembled structures formed through (weak) intermolecular bonding, i.e., hydrogen bonds and van der Waals forces are not included in the definition of a *"two dimensional coordination polymer."* A *"two dimensional coordination polymer"* is also distinct from 3D coordination polymers.

Herein, the term *"unsubstituted"* is synonymous with (means the same thing as) bound to no atom other than hydrogen. Herein, the term *"substituted"* is synonymous with (means the same thing as) substituted with an atom or a group of atoms other than hydrogen, such as substituted with a heteroatom (e.g. N, O, S, P, F, Cl, Br and I), or a linear, cyclic or branched, saturated or unsaturated C1-C50 organic group. For example, the C1-C50 organic group may be a C1-C50, C1-C30 or C1-C20 alkyl, alkenyl, alkynyl, aryl, alkylaryl, arylalkyl, arylalkenyl, arylalkynyl, alkenylaryl and alkynylaryl group, and optionally comprises one or more heteroatoms, such as N, O, S, P, F, Cl, Br and I.

The present disclosure relates to one dimensional and two dimensional coordination polymers comprising a plurality of repeating coordination units, each comprising a metal and a π-conjugated organic compound, the one dimensional or two dimensional delocalization of then π electrons along the repeating coordination units upon metal coordination of the π-conjugated organic compound providing a material with unprecedented purity, density, size, magnetic, and conductivity characteristics.

Specifically, according to the first aspect, the Applicant has found that one dimensional and two dimensional coordination polymers comprising a plurality of repeating coordination units, wherein the repeating coordination unit comprises a metal coordinated with a π-conjugated organic compound, and wherein the repeating coordination units are conjugated to one another (e.g. through the orbitals of the metal), exhibit new features for applications in the field of spintronic, molecular electronic, molecular magnet, fuel cell and catalysis. Indeed, the present disclosure provides one dimensional and two dimensional coordination polymers that are well-defined over large scales with regularly spaced metallic atoms, significant sizes (e*.g*., length), high metal atom density, and low amount of defects in their crystalline domains.

According to one or more embodiments, the coordination polymer has a length of at least 5 nm. According to one or more embodiments, the coordination polymer has a length of at least 10 nm. According to one or more embodiments, the coordination polymer has a length of at least 20 nm. According to one or more embodiments, the coordination polymer has a length of at least 50 nm. According to one or more embodiments, the coordination polymer has a length of at least 100 nm. According to one or more embodiments, the coordination polymer has a length ranging from about 5 nm to about 10 µm. According to one or more embodiments, the coordination polymer has a length ranging from about 10 nm to about 10 µm. According to one or more embodiments, the coordination polymer has a length ranging from about 20 nm to about 10 µm. According to one or more embodiments, the coordination polymer has a length ranging from about 50 nm to about 10 µm. According to one or more embodiments, the coordination polymer has a length ranging from about 100 nm to about 10 µm. According to one or more embodiments, the coordination polymer has a width ranging from about 3 nm to about 10 µm. According to one or more embodiments, the coordination polymer has a width ranging from about 3 nm to about 1 µm. According to one or more embodiments, the coordination polymer has a width ranging from about 10 nm to about 100 nm.

According to one or more embodiments, the repeating coordination unit has a length of at least 5 A. According to one or more embodiments, the repeating coordination unit has a length ranging from about 5A to about 3 nm. According to one or more embodiments, the repeating coordination unit has a length ranging from about 5 A to about 1 nm.

According to one or more embodiments, the coordination polymer comprises at least 3 repeating coordination units. According to one or more embodiments, the coordination polymer comprises at least 10 repeating coordination units. According to one or more embodiments, the coordination polymer comprises at least 50 repeating coordination units. According to one or more embodiments, the coordination polymer comprises at least 100 repeating coordination units. According to one or more embodiments, the coordination polymer comprises at least 200 repeating coordination units.

According to one or more embodiments, the coordination polymer has a ratio of defects to repeating coordination units lower than 0.05. According to one or more embodiments, the coordination polymer has a ratio of defects to repeating coordination units lower than 0.02. According to one or more embodiments, the one dimensional coordination polymer has a ratio of defects to repeating coordination units lower than 0.01. For example, the coordination polymers may comprise no more than 5 defects, preferably no more than 2 defects, and more preferably no more than 1 defect per 100 repeating units. The number of defects may be obtained by visual summation of the defects and of the repeating units from a STM image, for example.

According to one or more embodiments, the metal is coordinated with at least one coordination functional group of the π-conjugated organic compound. According to one or more embodiments, the metal is coordinated with at least two coordination functional groups of the π-conjugated organic compound. According to one or more embodiments, the π-conjugated organic compound comprises at least one first coordination functional group bound to a first metal and at least one second coordination functional group bound to a second metal. According to one or more embodiments, the π-conjugated organic compound comprises at least two first coordination functional groups bound to a first metal and at least two second coordination functional groups bound to a second metal. According to one or more embodiments, the first coordination functional groups are identical or different. According to one or more embodiments, the second coordination functional groups are identical or different.

Herein, the term *"coordination functional group"* is synonymous with (means the same thing as) a functional group of an organic compound configured for covalently bonding to a metal thereby forming a coordination unit. According to one or more embodiments, the *"coordination functional group"* may comprise a carbon and/or one or more heteroatoms, such as O, N, S and P, for bonding the π-conjugated organic compound to the metal. For example, the *"coordination functional group"* may be a X-type functional group (covalent bond) or a L-type functional group (coordination bond) using the covalent bond classification (CBC) method.

According to one or more embodiments, the repeating coordination unit comprises the following chemical structure (1): 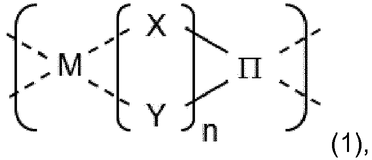 wherein
M is the metal; and
(XY)ₙΠ is the π-conjugated organic compound, wherein
   X is a first coordination functional group;
   Y is a second coordination functional group;
   Π is a linear, cyclic or branched C2-C50 organic moiety; and
   n is equal to or greater than 2.

According to one or more embodiments, n is an integer ranging from 2 to 4. According to one or more embodiments, n is equal to 2. According to one or more embodiments, n is equal to 3 or 4.

According to one or more embodiments, the repeating coordination unit comprises the following chemical structure (2): 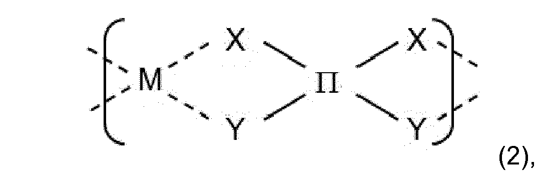 wherein
M is the metal; and
(XY)₂Π is the π-conjugated organic compound, wherein
   X is a first coordination functional group;
   Y is a second coordination functional group; and
   Π is a linear, cyclic or branched C2-C50 organic moiety.

According to one or more embodiments, the repeating coordination unit comprises the following chemical structure (3): 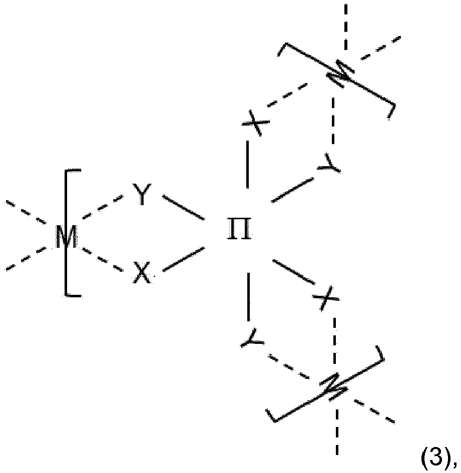 wherein
M is the metal; and
(XY)₃Π is the π-conjugated organic compound, wherein
   X is a first coordination functional group;
   Y is a second coordination functional group; and
   Π is a linear, cyclic or branched C2-C50 organic moiety.

According to one or more embodiments, the repeating coordination unit comprises the following chemical structure (4): 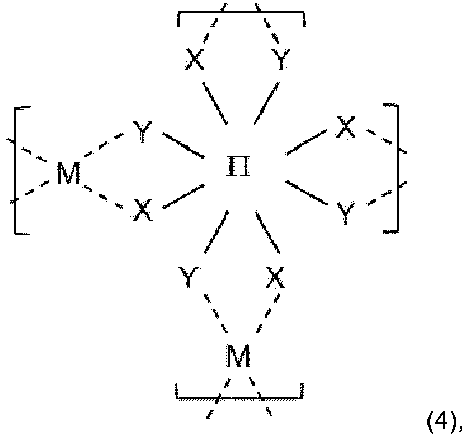 wherein
M is the metal; and
(XY)₄Π is the π-conjugated organic compound, wherein
   X is a first coordination functional group;
   Y is a second coordination functional group; and
   Π is a linear, cyclic or branched C2-C50 organic moiety.

According to one or more embodiments, the coordination polymer has a ratio of metal to π-conjugated organic compound ranging from about 1 to about 2 (for example, when the repeating coordination unit comprises a chemical structure (1)). According to one or more embodiments, the repeating coordination unit has a ratio of metal to π-conjugated organic compound of about 1 (for example, when the repeating coordination unit comprises a chemical structure (2)). According to one or more embodiments, the repeating coordination unit has a ratio of metal to π-conjugated organic compound of about 1.5 (for example, when the repeating coordination unit comprises a chemical structure (3)). According to one or more embodiments, the repeating coordination unit has a ratio of metal to π-conjugated organic compound of about 2 (for example, when the repeating coordination unit comprises a chemical structure (4)).

According to one or more embodiments, Π is π-conjugated to X and Y.

According to one or more embodiments, Π is selected from the group consisting of C2-C50, C2-C30 or C2-C20 alkyl, alkenyl, alkynyl, aryl, alkylaryl, arylalkyl, arylalkenyl, arylalkynyl, alkenylaryl, alkynylaryl, heteroalkyl, heteroalkenyl, heteroalkynyl, heteroaryl, heteroalkylaryl, heteroarylalkyl, heteroarylalkenyl and heteroarylalkynyl moieties. According to one or more embodiments, Π is a substituted or unsubstituted organic moiety comprising, and optionally constituted of, sp2 and/or sp3 carbons.

According to one or more embodiments, Π is selected from the group consisting of substituted or unsubstituted phenyl, diphenyl, perylene, pentacene, triphenylene, porphyrine, phthalocyanine, α-dicarbonyl and α-diimine (for example, when the repeating coordination unit comprises a chemical structure (1)). According to one or more embodiments, Π is selected from the group consisting of substituted or unsubstituted phenyl, diphenyl, perylene, pentacene, α-dicarbonyl and α-diimine (for example, when the repeating coordination unit comprises a chemical structure (2)). According to one or more embodiments, Π is selected from the group consisting of substituted or unsubstituted phenyl, diphenyl, perylene and pentacene. According to one or more embodiments, Π is selected from the group consisting of substituted or unsubstituted phenyl and triphenylene (for example, when the repeating coordination unit comprises a chemical structure (3)). According to one or more embodiments, Π is selected from the group consisting of substituted or unsubstituted porphyrine and phthalocyanine (for example, when the repeating coordination unit comprises a chemical structure (4)). According to one or more embodiments, Π is selected from the group consisting of substituted or unsubstituted α-dicarbonyl and α-diimine. According to one or more embodiments, Π is a benzene.

According to one or more embodiments, X and Y are the same or different. According to one or more embodiments, X and Y (individually) comprise a carbon and/or a heteroatom for bonding to the metal. According to one or more embodiments, the heteroatom is selected from the group consisting of O, N, S and P. According to one or more embodiments, the heteroatom is selected from the group consisting of O and N.

According to one or more embodiments, X and Y are (individually) selected from the group consisting of O, N, N(R), N(R)₂, S, P(R), OC(O), S(O), OS(O), OS(O)₂, C(O), C(NR), OC(NR), C(O)N(R)C(O), N₂, OP(O)(OH) and P(O)(OH). According to one or more embodiments, the R groups are identical or different, and are a hydrogen atom or a linear, cyclic or branched, saturated or unsaturated, substituted or unsubstituted C1-C50, C1-C30 or C1-C20 organic group. According to one or more embodiments, the C50, C1-C30 or C1-C20 organic group is a C1-C50, C1-C30 or C1-C20 alkyl, alkenyl, alkynyl, aryl, alkylaryl, arylalkyl, arylalkenyl or arylalkynyl group, and optionally comprises one or more heteroatoms such as N, O, S, P, F, Cl, Br and I. According to one or more embodiments, X and Y are (individually) selected from the group consisting of O, N(R).

According to one or more embodiments, the π-conjugated organic compound has a planar structure.

According to one or more embodiments, the π-conjugated organic compound is a linear, cyclic or branched C2-C50, C2-C30 or C2-C20 π-conjugated dione, such as an α-dione. According to one or more embodiments, the π-conjugated organic compound is selected from the group consisting of substituted or unsubstituted oxalic acid, quinone, quinonemonoimine, quinonediimine, oxalamide, oxalamidine. According to one or more embodiments, the π-conjugated organic compound is a substituted or unsubstituted quinone. According to one or more embodiments, the π-conjugated organic compound is selected from the group consisting of substituted or unsubstituted diamino-benzoquinonemonoimine, diamino-benzoquinonediimine, dihydroxy-benzoquinonemonoimine, dihydroxy-benzoquinonediimine, oxamide, oxalamidine and diamino-benzoquinone. According to one or more embodiments, the π-conjugated organic compound is further configured for bonding to the metal, such as by deprotonation and/or dehydrogenation of at least one coordination functional group precursor HX or HY. For example, the π-conjugated organic compound may be a 4,6-diaminoresorcinol, which is oxidized under air and further deprotonated due to a metallation process. According to one or more embodiments, the π-conjugated organic compound has a zwitterion form about as stable or more stable than the canonical form. According to one or more embodiments, the π-conjugated organic compound has a zwitterion form thermodynamically stable at room temperature. According to one or more embodiments, the π-conjugated organic compound is a switterionic quinone. According to one or more embodiments, the π-conjugated organic compound has a molecular weight lower than or equal to 1000 g/mol.

According to one or more embodiments, the metal is selected from the group consisting of transition metals, post-transition metals and lanthanides. According to one or more embodiments, the metal is a transition metals. According to one or more embodiments, the metal is selected from the group consisting of Fe, Mn, Cr, Ni, Pd, Co, Cu, and combination thereof. According to one or more embodiments, the metal is selected from the group consisting of Fe, Mn, Cr, Ni and combination thereof. According to one or more embodiments, the metal comprises Fe, preferably Fe(II). According to one or more embodiments, the metal has an oxidation state of two.

According to one or more embodiments, the metal is coordinated with at least two π-conjugated organic compounds. According to one or more embodiments, the repeating coordination units are conjugated to one another, for example, due to p-orbitals of the π-conjugated organic compounds overlapping with the orbitals of the metal.

According to one or more embodiments, the density of the metal atoms in the coordination polymer ranges from about 10¹³ metal atoms.cm⁻² to about 5.10¹⁴ metal atoms.cm⁻². According to one or more embodiments, the density of metal atoms in the coordination polymer ranges from about 5.10¹³ metal atoms.cm⁻² to about 5.10¹⁴ metal atoms.cm⁻².

According to one or more embodiments, the coordination polymer is in a form of a monolayer (e.g. one-molecule thick layer). According to one or more embodiments, the coordination polymer is one-molecule thick. For example, the thickness of the coordination polymer may be equal to about the thickness of the π-conjugated organic compound.

According to a second aspect, the present disclosure also relates to a two dimensional structure comprising self-assembled one dimensional coordination polymers according to embodiments of the first aspect, such as wherein the repeating coordination unit comprises the chemical structure (1) or (2).

According to one or more embodiments, the one dimensional coordination polymers are self-assembled by multipolar electrostatic inter-chain interaction. According to one or more embodiments, the one dimensional coordination polymers are self-assembled by at least one interaction selected from the group consisting of hydrogen bonding and van der Waals forces.

According to one or more embodiments, the metals of the two dimensional structure form a hexagonal network. According to one or more embodiments, the hexagonal network has a metal-to-metal length ranging from about 5 A to about 30 A. According to one or more embodiments, the hexagonal network has a metal-to-metal length ranging from about 5 A to about 10 A.

According to one or more embodiments, the two dimensional structure has a length of at least 5 nm. According to one or more embodiments, the two dimensional structure has a length of at least 10 nm. According to one or more embodiments, the two dimensional structure has a length of at least 20 nm. According to one or more embodiments, the two dimensional structure has a length of at least 50 nm. According to one or more embodiments, the two dimensional structure has a length of at least 100 nm. According to one or more embodiments, the two dimensional structure has a length ranging from about 5 nm to about 10 µm. According to one or more embodiments, the two dimensional structure has a length ranging from about 10 nm to about 10 µm. According to one or more embodiments, the two dimensional structure has a length ranging from about 20 nm to about 10 µm. According to one or more embodiments, the two dimensional structure has a length ranging from about 50 nm to about 10 µm. According to one or more embodiments, the two dimensional structure has a length ranging from about 100 nm to about 1 µm. According to one or more embodiments, the two dimensional structure has a width ranging from about 3 nm to about 10 µm. According to one or more embodiments, the two dimensional structure has a width ranging from about 3 nm to about 1 µm. According to one or more embodiments, the two dimensional structure has a width ranging from about 10 nm to about 100 nm.

According to one or more embodiments, the density of the metal atoms in the two dimensional structure ranges from about 10¹³ metal atoms.cm⁻² to about 5.10¹⁴ metal atoms.cm⁻². According to one or more embodiments, the density of metal atoms in the two dimensional structure ranges from about 5.10¹³ metal atoms.cm⁻² to about 5.10¹⁴ metal atoms.cm⁻².

According to one or more embodiments, the two dimensional structure is in a form of a monolayer (e.g. one-molecule thick layer). According to one or more embodiments, the two dimensional structure is one-molecule thick. For example, the thickness of the two dimensional structure may be equal to about the thickness of the π-conjugated organic compound.

According to a third aspect, the present disclosure also relates to an assembly comprising a substrate and one or more one dimensional or two dimensional coordination polymers according to any of the embodiments of the first aspect and/or one or more two dimensional structures according to any of the embodiments of the second aspect deposited thereon.

According to one or more embodiments, the one or more coordination polymers and/or the one or more structures may form a monolayer (e.g. one-molecule thick layer) on a surface of the substrate.

According to one or more embodiments, the substrate comprises a metal surface or semi-conductor surface. According to one or more embodiments, the substrate comprises a monocrystalline metal surface. According to one or more embodiments, the substrate comprises an Ag(111) surface.

According to one or more embodiments, the substrate comprises step edges, such as monocrystal step edges, thereby allowing a selection of the orientation direction of the growth of the coordination polymer and/or the structure.

A process for producing a one dimensional or two dimensional coordination polymer according to any of the embodiments of the first aspect and/or a two dimensional structure according to any of the embodiments of the second aspect is also provided herein. Indeed, the Applicant has found that co-deposition of a metal and a π-conjugated organic compound on a substrate improves the control of the growth process and provides 1 D and 2D structures that may form in the micrometer scale. Specifically, according to a fourth aspect, the present disclosure provides a process for producing a one dimensional or two dimensional coordination polymer and/or a two dimensional structure comprising one dimensional coordination polymers. The process comprises co-depositing the metal and the π-conjugated organic compound on a substrate.

According to one or more embodiments, the process further comprises maintaining the temperature of the substrate at a temperature greater than the temperature of desorption from the substrate of the metal and/or the π-conjugated organic compound, *i.e.,* at a temperature above a temperature at which at least one of the metal and the π-conjugated organic compound may desorb from the substrate. According to one or more embodiments, the co-depositing comprises maintaining the temperature of the substrate at a temperature greater than the temperature of desorption from the substrate of the metal and/or the π-conjugated organic compound. Indeed, controlling the temperature of the substrate during co-deposition allows further increasing the length and lowering the number of defects of the coordination polymer.

According to one or more embodiments, the co-depositing comprises maintaining the temperature of the substrate at a temperature greater than 10°C above the temperature of desorption from the substrate of the metal and/or the π-conjugated organic compound. According to one or more embodiments, the co-depositing comprises maintaining the temperature of the substrate at a temperature greater than 30°C above the temperature of desorption from the substrate of the metal and/or the π-conjugated organic compound. According to one or more embodiments, the co-depositing comprises maintaining the temperature of the substrate at a temperature ranging from 50°C to 150°C above the temperature of desorption from the substrate of the metal and/or the π-conjugated organic compound. According to one or more embodiments, the co-depositing comprises maintaining the temperature of the substrate at a temperature ranging from 60°C to 100°C above the temperature of desorption from the substrate of the metal and/or the π-conjugated organic compound.

According to one or more embodiments of the process to produce the one dimensional coordination polymer, the co-depositing comprises maintaining the temperature of the substrate at a temperature ranging from 50°C to 150°C above the temperature of desorption from the substrate of the metal and/or the π-conjugated organic compound. According to one or more embodiments of the process to produce the two dimensional structure, the co-depositing comprises maintaining the temperature of the substrate at a temperature ranging from 50°C to 100°C above the temperature of desorption from the substrate of the metal and/or the π-conjugated organic compound.

According to one or more embodiments, the co-depositing comprises maintaining the temperature of the substrate at a temperature ranging from 200°C to 400°C. According to one or more embodiments, the co-depositing comprises maintaining the temperature of the substrate at a temperature ranging from 200°C to 350°C.

According to one or more embodiments, the π-conjugated organic compound comprises at least one first coordination functional group precursor HX for bonding to a first metal after a first deprotonation or dehydrogenation step (for example, when the coordination functional group is an X-type functional group), and/or at least one second coordination functional group precursor HY (for example, when the coordination functional group is an X-type functional group), for bonding to a second metal after a second deprotonation or dehydrogenation step. According to one or more embodiments, X and Y (individually) comprise a heterotam (e.g. O, N, S and P) for bonding to the metal resulting from the deprotonation or dehydrogenation of a corresponding coordination functional group precursor.

According to one or more embodiments, the process further comprises determining the temperature of desorption from the substrate of the metal and/or the π-conjugated organic compound. For example, the desorption temperature of a compound from a substrate may be determined by thermal desorption spectroscopy or X-ray photoemission spectroscopy.

According to one or more embodiments, if the co-depositing is performed at a temperature lower than or equal to the temperature of desorption from the substrate of the metal and/or the π-conjugated organic compound, the process further comprises maintaining the temperature of the substrate at a temperature greater than the temperature of desorption from the substrate of the metal and/or the π-conjugated organic compound. For example, the co-depositing may comprise maintaining the temperature of the substrate at a temperature lower than the temperature of desorption from the substrate of the metal and/or the π-conjugated organic compound; and the process may further comprise annealing the co-deposited metal and π-conjugated organic compound. According to one or more embodiments, the annealing is performed at a temperature greater than the temperature of desorption from the substrate of the metal and/or the π-conjugated organic compound. According to one or more embodiments, the annealing is performed at a temperature ranging from about 150°C to about 400°C. According to one or more embodiments, the annealing is performed at a temperature ranging from about 160°C to about 400°C. According to one or more embodiments, the annealing is performed at a temperature ranging from about 180°C to about 400°C. According to one or more embodiments, the annealing is performed at a temperature ranging from about 150°C to about 350°C. According to one or more embodiments, the annealing is performed at a temperature ranging from about 150°C to about 300°C.

According to one or more embodiments, the co-depositing is a solvent free co-deposition. According to one or more embodiments, the co-depositing comprises evaporating or sublimating the metal and/or the π-conjugated organic compound. According to one or more embodiments, the evaporating or sublimating comprises evaporating or sublimating the π-conjugated organic compound at a temperature ranging from about 50°C to about 400°C. According to one or more embodiments, the evaporating or sublimating comprises evaporating or sublimating the π-conjugated organic compound at a temperature ranging from about 200°C to about 300°C. According to one or more embodiments, the evaporating or sublimating comprises evaporating or sublimating the metal at a temperature ranging from about 50°C to about 400°C. According to one or more embodiments, the evaporating or sublimating comprises evaporating or sublimating the metal at a temperature ranging from about 200°C to about 300°C.

According to one or more embodiments, the evaporating comprises evaporating the metal using an electron-beam evaporator or Knudsen cell.

According to one or more embodiments, the co-depositing comprises co-depositing under vacuum. According to one or more embodiments, the co-depositing comprises co-depositing under ultra high vacuum (UHV). According to one or more embodiments, the co-depositing comprises co-depositing at a pressure lower than about 10⁻⁶ Pascal. According to one or more embodiments, the co-depositing comprises co-depositing at a pressure lower than about 10⁻⁷ Pascal.

According to one or more embodiments, the co-depositing comprises depositing the metal at a flux ranging from about 10¹⁵ metal atoms.cm-².s⁻¹ to about 10¹⁸ metal atoms.cm⁻².s⁻¹. According to one or more embodiments, the co-depositing comprises deposition the metal at flux ranging from about 0.8.10¹⁶ metal atoms.cm⁻².S⁻¹ to about 6.10¹⁶ metal atoms.cm⁻².s⁻¹.

According to one or more embodiments, the co-depositing comprises depositing the π-conjugated organic compound at a (molecular) rate ranging from about 0.01 ML/min to about 10ML/min, when calibrated at room temperature. ML is defined as a monolayer of molecules that is 2.10¹⁴ molecule.cm⁻². According to one or more embodiments, the co-depositing comprises depositing the π-conjugated organic compound at a rate ranging from about 0.1ML/min to about 1ML/min, when calibrated at room temperature. According to one or more embodiment, the calibration may be performed by scanning tunneling microscopy, X-ray photoemission spectroscopy or using quartz-microbalance.

According to one or more embodiments, the co-depositing comprises co-depositing for less than about 180 min. According to one or more embodiments, the co-depositing comprises co-depositing for about 1 min to about 180 min. According to one or more embodiments, the co-depositing comprises co-depositing for about 10 min to about 60 min.

According to one or more embodiments, the step of maintaining the temperature of the substrate at a temperature lower than the temperature of desorption from the substrate of the metal and/or the π-conjugated organic compound, has a duration of less than about 180 min. According to one or more embodiments, said step of maintaining has a duration of about 1 min to about 180 min. According to one or more embodiments, said step of maintaining has a duration of about 1 min to about 60 min.

According to one or more embodiments, the step of maintaining the temperature of the substrate at a temperature greater than the temperature of desorption from the substrate of the metal and/or the π-conjugated organic compound, has a duration of less than about 180 min. According to one or more embodiments, said step of maintaining has a duration of about 1 min to about 180 min. According to one or more embodiments, said step of maintaining has a duration of about 1 min to about 60 min.

According to one or more embodiments, the annealing comprises annealing for less than about 180 min. According to one or more embodiments, the annealing comprises annealing for about 1 min to about 180 min. According to one or more embodiments, the annealing comprises annealing for about 10 min to about 60 min.

According to a fifth aspect, the present disclosure also relates to a use of a one dimensional or two dimensional coordination polymer according to any of the embodiments of the first aspect, and/or a two dimensional structure according to any of the embodiments of the second aspect, and/or an assembly according to any of the embodiments of the third aspect, and/or a one dimensional coordination or two dimensional polymer produced by the process according to any of the embodiments of the fourth aspect, for spintronic molecular electronic, molecular magnet, and/or catalysis applications.

According to a sixth aspect, the present disclosure also relates to a fuel cell comprising a one dimensional or two dimensional coordination polymer according to any of the embodiments of the first aspect, and/or a two dimensional structure according to any of the embodiments of the second aspect, and/or an assembly according to any of the embodiments of the third aspect, and/or a one dimensional coordination or two dimensional polymer produced by the process according to any of the embodiments of the fourth aspect.

According to a seventh aspect, the present disclosure also relates to a molecular magnet comprising a one dimensional or two dimensional coordination polymer according to any of the embodiments of the first aspect, and/or a two dimensional structure according to any of the embodiments of the second aspect, and/or an assembly according to any of the embodiments of the third aspect, and/or a one dimensional coordination or two dimensional polymer produced by the process according to any of the embodiments of the fourth aspect.

### EXAMPLES

Examples of coordination polymers, two dimensional structures, assemblies and processes according to embodiments of the first, second, third and fourth aspects are described therein.

Molecule **1** (R = H; diamino-benzoquinone was selected as the π-conjugated organic compound. Molecule **1** is a known ligand in coordination chemistry, especially in the stepwise synthesis of polynuclear complexes, as shown in Scheme 1. Scheme 1 describes the chemical structure of molecule **1** and coordination compounds **2** and **3** obtained after deprotonation and metallation of molecule **1** (see Taquet, J.P., et al., "Stepwise synthesis, structures, and reactivity of mono-, di-, and trimetallic metal complexes with a 6 π + 6 π quinonoid zwitterion," Inorganic Chemistry, 2004, 43(22), p. 6944-6953).

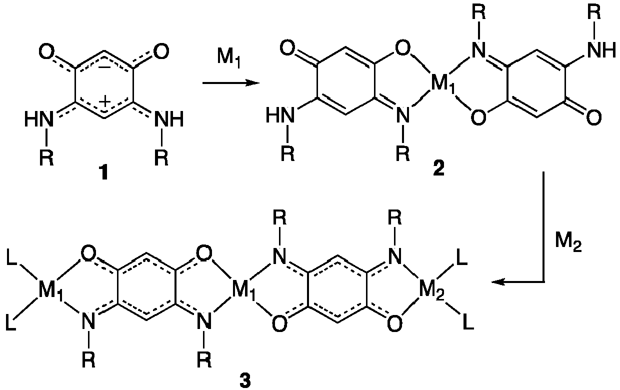

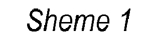

Co-depositions of molecule **1** and Fe atoms were performed on substrates comprising an Ag(111) surface, the temperature of the Ag(111) surfaces being held at various temperatures ranging from 120°C to 360°C. This temperature range was chosen to be either below or above the desorption temperature of molecule **1** from an Ag(111) surface, which is estimated to be 150°C. Accordingly, when the temperature of the Ag(111) surface is above 150°C, only remain on the surface the molecules **1** that may bound to an iron atom.

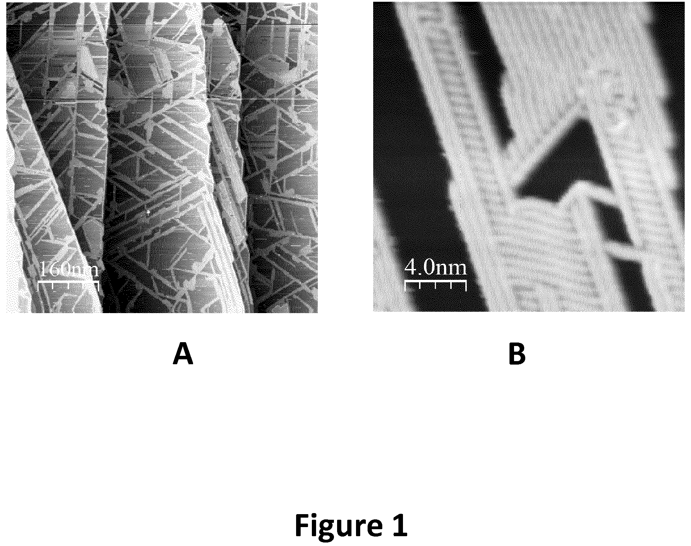

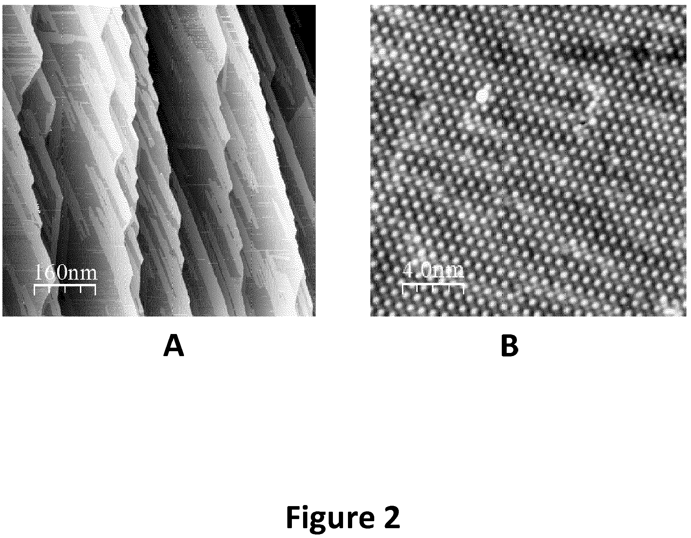

Co-deposition at 240°C and 300°C leads to the formation of needle-like domains on the surface of Ag(111), as shown in Figures 1A, 1B, 2A and 2B. Figure 1A shows a 100 nm x 100 nm STM image of molecules **1** and iron atoms co-deposited at 240°C on Ag(111) surface providing needle-like 1D crystalline structures. Figure 1B shows a 20 nm x 20 nm STM image of Figure 1A. Figure 2A shows a 100 nm x 100 nm STM image of molecules **1** and iron atoms co-deposited at 300°C on Ag(111) surface providing 2D crystalline structures comprising self-assembled 1 D crystalline structures. Figure 2B shows a 20 nm x 20 nm STM image of Figure 2A. The needles are 5-15 nm long and can reach 300 nm or greater at 240°C and 10-50 nm long and can reach 800 nm or greater at 300°C. A close look of these chains shows alternating bright and dark protrusions with a periodicity of 8.0±0.5 A (see Figures 1B and 2B).

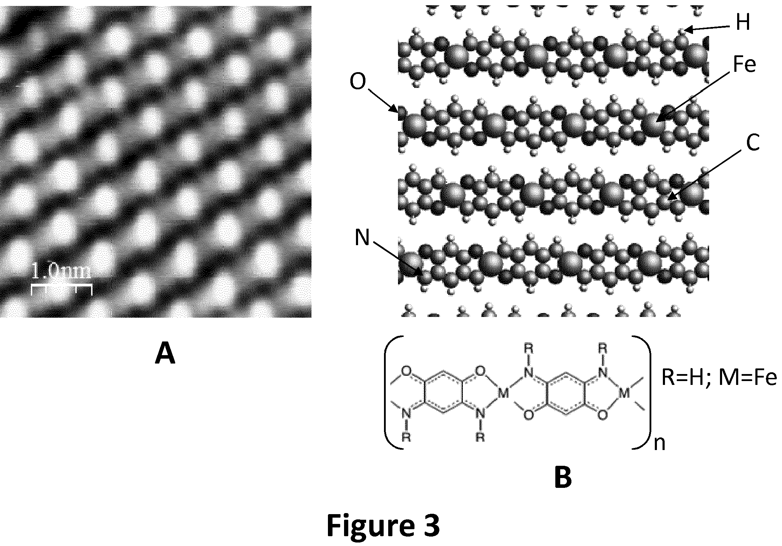

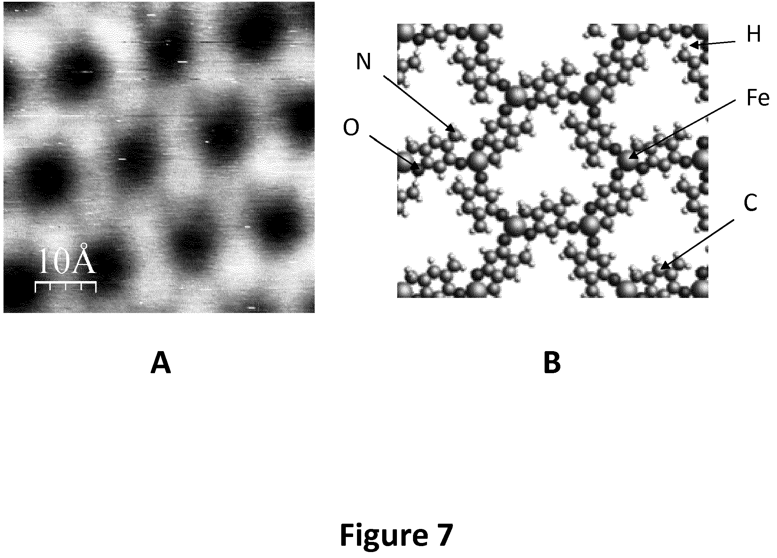

Figure 3A shows a high resolution STM images of the two dimensional structure obtained. The bright features of the homogeneous density of state (DOS) measured on the needle-like structures (compared to a triangular metal-organic coordination network (MOCN) domain as shown in Figure 7A, for example) points out the covalent character of the needle-like linear chains. This is also consistent with DFT simulations of line of polymer (see Figure 3B). Furthermore, based on these experimental results, a precise description of the interaction between molecule **1** and Fe was also obtained by DFT simulations of the free standing monolayer without the substrate. 1D and 2D crystalline structures with 1:1 stoichiometries are found to reproduce the experimental results (see Figure 3B), each Fe atoms interacting with two molecules **1** in a needle like configuration. The Fe/C stoichiometry measured by XPS is constant and consistent with the 1:1 stoichiometry of the chains formation. This polymer is composed of molecules **1** bound to Fe(II) atoms according to a deprotonation/metallation process as shown in the formation of complex **3** of Scheme 1. The 1 D lines of the one dimensional coordination polymer are then stacked together to form a 2D crystalline structure of self-assembled needle-like structures bound by multipolar electrostatic inter-chain interaction. Finally, a hexagonal network of Fe, wherein the Fe atoms are distanced from each other by about 7.7-7.8 A, is found in agreement with intermetallic distances found in complex **3.**

A difference between the substrate being held at 240°C and 300°C during the growth is the nucleation rate of the polymer. The difference in nucleation rate may be due either to a change in the residential time of molecules on the surface decreasing with the temperature or to a modification of the reaction time between molecules and iron atoms. In these examples, the nucleation rate decreases from about 0.1% nucleation sites per nm² for 240°C to 0.02% nucleation sites per nm² for 300°C, indicating that the residential time may be a parameter improving growth control of the polymer.

Furthermore, Figure 2B shows that the chains have increase length compared to the one obtains in Figure 1B. Indeed, while the chains are perfectly aligned between each other at 300°C, the chains obtained at 240°C are formed by the aggregation of smaller 1 D lines. As a result, the co-deposition at 300°C enables the formation of more ordered 2D linear chains extended over more than half a micron, which indicates that the temperature of the substrate may be a parameter improving growth control of the polymer.

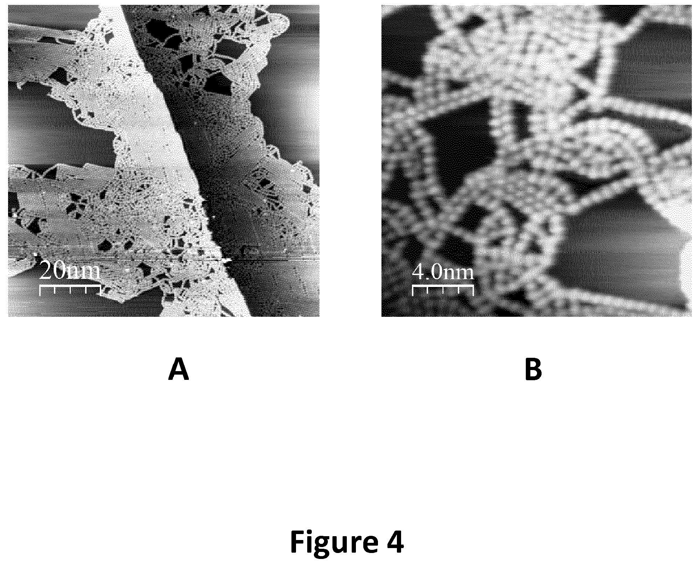

Further increasing the temperature to 360°C, however, starts to degrade the needle-like domains due to the formation of disordered ones (see Figures 4A and 4B). Figure 4A shows a 100 nm x 100 nm STM image of molecules **1** and iron atoms co-deposited on Ag(111) surface providing needle-like 1D crystalline structures obtained at 360°C. Figure 4B shows a 20 nm x 20 nm STM image of Figure 4A. In this example, the complete degradation occurs at 480°C (not shown).

Also, it can be seen, for example from Figure 2A, that the needle-like chains grew massively in the same direction probably due to the interaction between the extending polymers and step edges of the Ag(111) surface, the step edges allowing a selection of the orientation direction of the growth and enabling the growth along the next steps. In this example, it is worth noticing that the extension is only limited by the separation between step edges and can be increased when prepared on substrates with larger terraces.

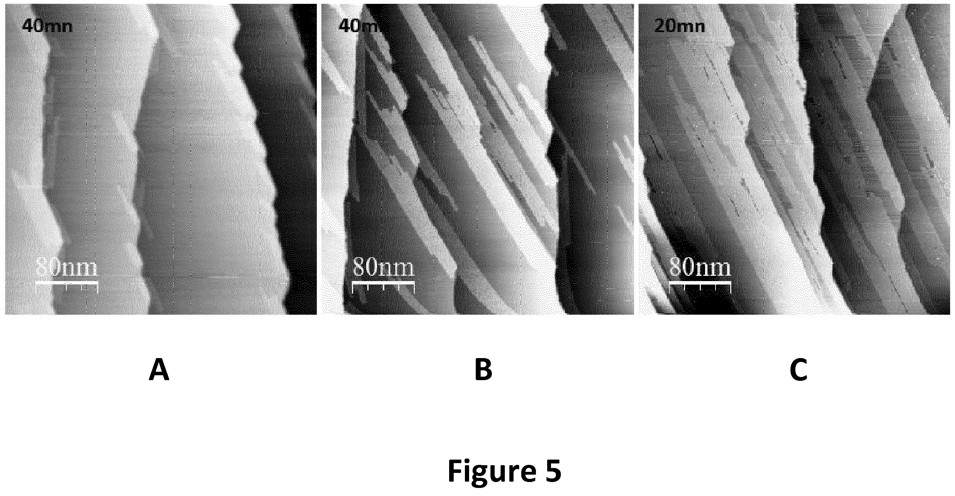

Figures 5A, 5B and 5C show 400 nm x 400 nm STM images showing the effect of iron flux on the growth of the needle-like chains of molecules **1** and iron atoms co-deposited on Ag(111) surface while keeping the flux of molecule **1** and the substrate temperature constant (0.05ML.mn⁻¹, 300°C). To this end, three different Fe fluxes are used ranging from 0.8 E10¹⁶ (Figure 5A), to 4.10¹⁶ (Figure 5B) and 6 E10¹⁶ (Figure 5C) iron atoms.cm⁻².s⁻¹; deposition time are 40 min (Figure 5A), 40 min (Figure 5B) and (Figure 5C) 20 min; and the density of iron atoms are 20.10¹⁸ (Figure 5A), 70.10¹⁸ (Figure 5B) and 100.10¹⁸ (Figure 5C) iron atoms.cm⁻². Figures 5A, 5B and 5C show that the nucleation remains in each example, but when the flux is increased, the chain's expansion becomes longer because of an increased total amount of Fe. The length of the needle-like chains ranges from 80 nm long for a lower deposition rate (Figure 5A), to 200 nm (Figure 5B) and 600 nm (Figure 5C) for a higher deposition rate. At a certain rate, the needle-like chains may be contaminated by excess of iron atoms that disturb the growth but do not change the local stoichiometry. This indicates that the stoichiometry of the networks is set and does not depend on the co-deposition conditions in the range used in the experiments. This example also shows that choosing a substrate temperature higher than the desorption temperature may allow a robust control of the synthesis of 1 D and 2D crystalline networks.

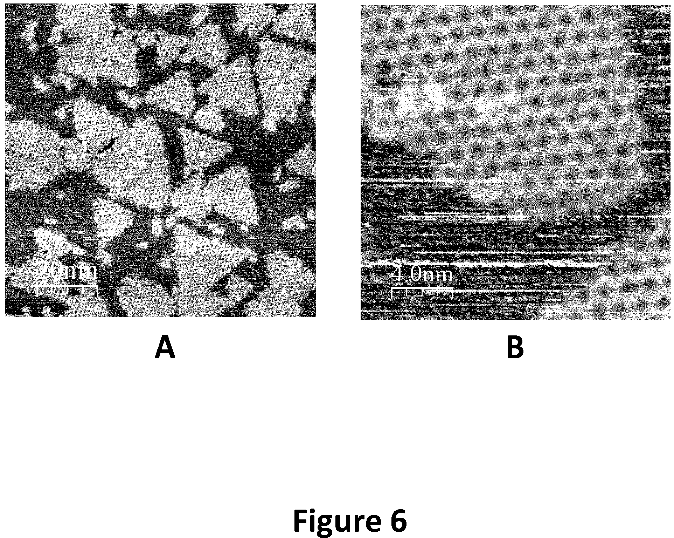

Now, in contrast with embodiments of the present disclosure, the co-deposition at 120°C leads to the formation of triangular metal-organic coordination network (MOCN) domains of about 50-60 nm length, as shown in Figures 6A and 6B. Figure 6A shows a 100 nm x 100 nm STM image of molecules **1** and iron atoms co-deposited on Ag(111) surface providing triangular MOCN domains obtained at 120°C. Figure 6B shows a 20 nm x 20 nm STM image of Figure 6A. Triangular MOCN domains are composed by a 2D honeycomb network of 8.6 A (see high resolution STM image of Figure 7A). Based on these experimental results, a precise description of the interaction between **1** and Fe was also obtained by DFT simulations of the free standing monolayer without the substrate. A Triangular MOCN domain with a 2:3 stoichiometry is found to reproduce the experimental results (See Figure 7B), each Fe atoms interacting with three molecules **1** in a threefold configuration resulting in a 8.2 A honeycomb network.

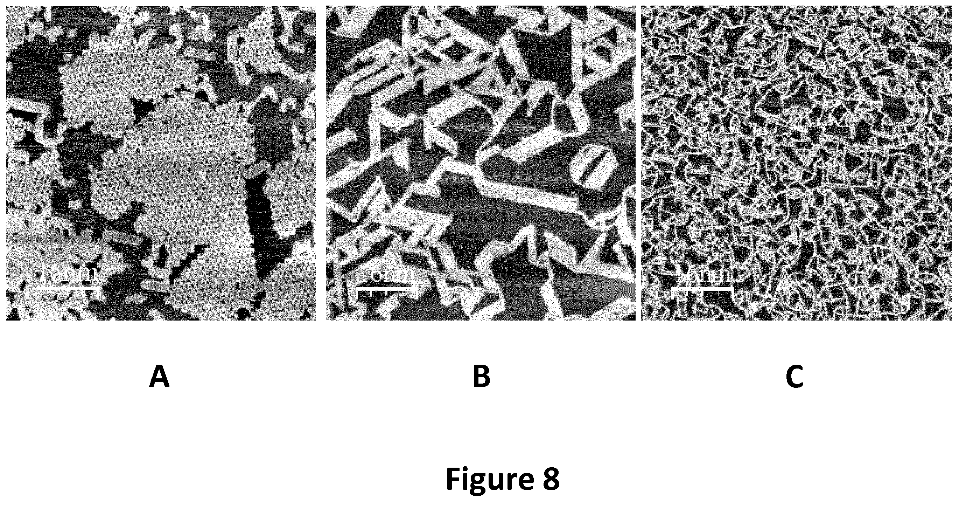

Further, in contrast with the preferred co-deposition process wherein the co-depositing comprises maintaining the temperature of the substrate at the temperature of desorption from the substrate of the metal and/or the π-conjugated organic compound, Figures 8A, 8B and 8C show the 2D arrangement obtained with a growth where molecules **1** and iron atoms are deposited onto the substrate at a temperature lower than the temperature of desorption from the substrate of molecule **1** (120°C in this example; Figure 8A) followed by a first annealing step (Figure 8B) and optionally and second annealing step (Figure 8C). Figure 8A shows a structural organization similar to the triangular MOCN domain obtained at 120°C in Figure 6A. Figures 8B and 8C, however, shows 1D linear chains obtained after annealing the triangular MOCN domain of Figure 8A. Although, the size of the domains of Figure 8B is limited and the formation of a certain amount of disordered chains is observed in Figure 8C (compared to Figures 1A, for example), one dimensional coordination polymer were also obtained. In this example, molecules **1** and iron atoms are first deposited on the surface at temperature lower than the temperature of desorption from the substrate of molecule **1,** followed by annealing the triangular MOCN domain thus formed. However, due to irreversibility behavior of covalent bonds some defects may remain after the annealing step.

The examples provided herein show that the co-deposition of a bicomponent material comprising a metal and a π-conjugated organic compound may produce 1 D and 2D structures in the micrometer scale. Improved results are obtained when co-depositing at a substrate temperature above the temperature of desorption from the substrate of one of the two components as, after the first step of nucleation, the deposited molecules may remain on the surface only when they find a favorable adsorption site in the border of the first nuclei. As a result, an improved selectivity in the crystal growth, which may counterbalance the growth limitation induced by the formation of irreversible bonds at lower temperature, may be obtained. Therefore a preferred method, by co-depositing at a substrate temperature above the temperature of desorption from the substrate of one of the two components, allows the growth of micrometer size crystalline covalent networks.

All experiments were performed in a multicharacterisation chamber under UHV. Molecule **1** was evaporated from a crucible held at 250°C. Fe atoms were deposited from an iron rod (Goodfellow) using an electron-beam evaporator. The experiments are done with a molecular rate of 0.05ML/min calibrated at room temperature. The resulting synthetic films were characterized using roomtemperature STM (Omicron VT-STM). Images were plane-corrected and analyzed using the WSxM software. Gas phase calculations were done in the framework of the density functional theory (DFT) using the SIESTA package.

Although the above-mentioned embodiments have been described in detail, it is understood that further embodiments of the disclosure may be envisaged. So for example, embodiments of one dimensional coordination polymer according to the present disclosure may be prepared from metals other than Fe and/or π-conjugated organic compounds other than molecule **1.**

## Claims

1. A one dimensional or two dimensional coordination polymer comprising a plurality of repeating coordination units, wherein the repeating coordination unit comprises a metal coordinated with a π-conjugated organic compound, and wherein the repeating coordination units are conjugated to one another.

2. The one dimensional or two dimensional coordination polymer according to claim 1, wherein the repeating coordination unit comprises the following chemical structure (1): 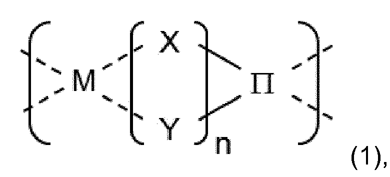 wherein
M is the metal; and
(XY)ₙΠ is the π-conjugated organic compound, wherein
X is a first coordination functional group;
Y is a second coordination functional group;
Π is a linear, cyclic or branched C2-C50 organic moiety; and
n is equal to or greater than 2.

3. The one dimensional or two dimensional coordination polymer according to claim 1 or claim 2, wherein the repeating coordination unit comprises the following chemical structure (2): 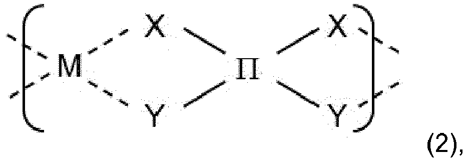 wherein
M is the metal; and
(XY)₂Π is the π-conjugated organic compound, wherein
X is a first coordination functional group;
Y is a second coordination functional group; and
Π is a linear, cyclic or branched C2-C50 organic moiety.

4. The two dimensional coordination polymer according to any of the preceding claims, wherein the repeating coordination unit comprises the following chemical structure (3): 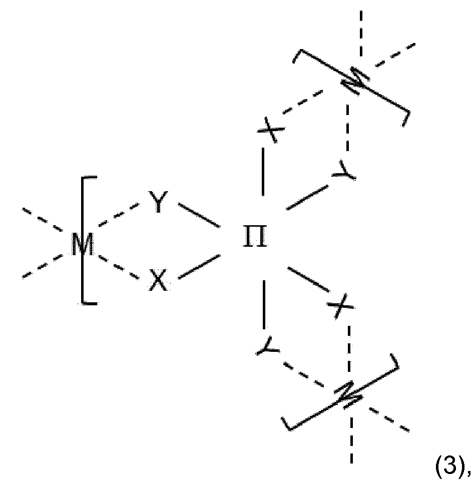 wherein
M is the metal; and
(XY)₃Π is the π-conjugated organic compound, wherein
X is a first coordination functional group;
Y is a second coordination functional group; and
Π is a linear, cyclic or branched C2-C50 organic moiety.

5. The two dimensional coordination polymer according to any of the preceding claims, wherein the repeating coordination unit comprises the following chemical structure (4): 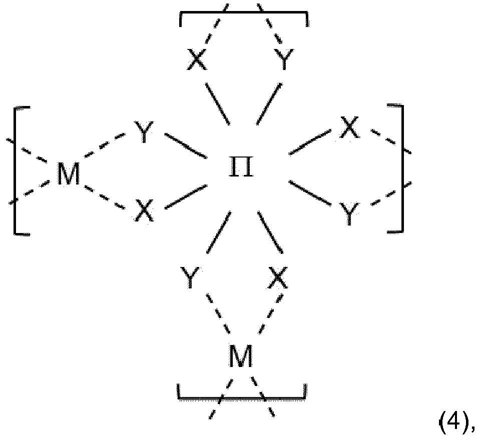 wherein
M is the metal; and
(XY)₄Π is the π-conjugated organic compound, wherein
X is a first coordination functional group;
Y is a second coordination functional group; and
Π is a linear, cyclic or branched C2-C50 organic moiety.

6. The one dimensional or two dimensional coordination polymer according to any of the preceding claims, having a length of at least 5 nm.

7. A two dimensional structure comprising self-assembled one dimensional coordination polymers according to any of claims 1, 2 and 3.

8. The two dimensional structure according to claim 7, wherein the metals form a hexagonal network.

9. An assembly comprising a substrate and one or more one dimensional or two dimensional coordination polymers according to any of claims 1 to 6 and/or one or more two dimensional structures according to claim 7 or claim 8 deposited thereon.

10. A process for producing a one dimensional or two dimensional coordination polymer according to any of claims 1 to 6, and/or a two dimensional structure according to claim 7 or claim 8, the process comprising:
co-depositing the metal and the π-conjugated organic compound on a substrate.

11. The process according to claim 10, wherein if the co-depositing is performed at a temperature lower than or equal to the temperature of desorption from the substrate of the metal and/or the π-conjugated organic compound, the process further comprises annealing the co-deposited metal and π-conjugated organic compound at a temperature greater than the temperature of desorption from the substrate of the metal and/or the π-conjugated organic compound.

12. The process according to claim 10 or claim 11, wherein the co-depositing comprises evaporating or sublimating the metal and/or the π-conjugated organic compound.

13. Use of a one dimensional or two dimensional coordination according to any of claims 1 to 6, and/or a two dimensional structure according to claim 7 or claim 8, and/or an assembly according to claim 9, and/or a one dimensional or two dimensional coordination produced by the process according to any of claims 10 to 12, for spintronic, molecular electronic, molecular magnet, fuel cell and/or catalysis applications.

14. Fuel cell comprising a one dimensional or two dimensional coordination according to any of claims 1 to 6, and/or a two dimensional structure according to claim 7 or claim 8, and/or an assembly according to claim 9, and/or a one dimensional or two dimensional coordination produced by the process according to any of claims 10 to 12.

15. Molecular magnet comprising a one dimensional or two dimensional coordination according to any of claims 1 to 6, and/or a two dimensional structure according to claim 7 or claim 8, and/or an assembly according to claim 9, and/or a one dimensional or two dimensional coordination produced by the process according to any of claims 10 to 12.
